# EUROPÄISCHE PATENTANMELDUNG

(11) **EP 1 683 498 A1**
(43) Veröffentlichungstag der Anmeldung: **26.07.2006**
(21) Anmeldenummer: 06100602.9
(22) Anmeldetag: 19.01.2006
(51) Int. Cl.: A61C 17/34

(54) **Rotierende Zahnbürste**

(30) Priorität: 20.01.2005 AT 2605 U
(71) Anmelder: R & D Research&Development Consulting GmbH, 9020 Klagenfurt (AT)
(72) Erfinder: Kern, Harald, 9020, Klagenfurt (AT)
(74) Vertreter: Henhapel, Bernhard

(57) **Zusammenfassung**

Zahnbürste mit einem Gehäuse (1) und einem im Gehäuse (1) beweglich gelagerten, stabförmigen Drehelement (2), das an seinem ersten Ende mit einem Bürstenkopf (3) versehen ist, und an seinem zweiten Ende vorzugsweise über ein Kupplungsteil (4) mit einem elektrischen Motor (5) zur Erzeugung einer Rotation des Bürstenkopfs (3) verbindbar ist. Erfindungsgemäß ist vorgesehen, dass eine mechanische Übersetzereinheit vorgesehen ist, die eine durch den Motor (5) erzeugte Rotationsbewegung des Drehelements (2) in eine Translationsbewegung des Drehelements (2) parallel zu dessen Längsachse (L) umsetzt, und die Rotation des Bürstenkopfs (3) um die Längsachse (L) des Drehelements (2) erfolgt.

## Beschreibung

Die Erfindung betrifft eine elektrische Zahnbürste mit einem stabförmigen Drehelement, das in einem Gehäuse beweglich gelagert ist, wobei das Drehelement an seinem ersten Ende mit einem Bürstenkopf versehen ist, und mit seinem zweiten Ende mit einem elektrischen Motor zur Erzeugung einer Rotation des Bürstenkopfs verbindbar ist, gemäß dem Oberbegriff von Anspruch 1.

Zahnbürsten dieser Art sind bestens bekannt und vielfach in Gebrauch. Sie verfügen entweder über einen Bürstenkopf, bei dem die Borsten parallel zur Rotationsachse des Bürstenkopfes ausgerichtet sind, oder über einen Bürstenkopf, bei dem die Borsten senkrecht zur Rotationsachse ausgerichtet sind.

Sind die Borsten parallel zur Rotationsachse des Bürstenkopfes ausgerichtet, so ergibt sich der Vorteil, dass auf die Borsten aufgebrachtes Zahnputzmittel, etwa Zahnpasta, besser auf der Zahnoberfläche verteilt wird, da die Rotationsachse des Bürstenkopfes in diesem Fall senkrecht zur Zahnoberfläche gerichtet ist und das Zahnputzmittel somit nicht aus der Mundhöhle geschleudert wird. Allerdings entsteht der Nachteil, dass die Putzrichtung nicht jene ist, die von zahnärztlicher Seite empfohlen wird, da stets auch eine Bewegung der Borsten von der Zahnkante zum Zahnfleisch auftritt. Verunreinigungen werden daher in die Zahntaschen befördert, was aber vermieden werden sollte.

Daher wurden auch Zahnbürsten mit einem Bürstenkopf vorgeschlagen, bei dem die Borsten senkrecht zur Rotationsachse ausgerichtet sind. Der Bürstenkopf ist dabei rotationssymmetrisch ausgeführt, wobei die Bürsten über die gesamte Oberfläche des Bürstenkopfes angeordnet sind. Während des Zähneputzens verläuft daher die Rotationsachse im wesentlichen parallel zur Zahnoberfläche, sodass eine einheitliche Bewegungsrichtung der Borsten vom Zahnfleisch zur Zahnkante ("Rot nach Weiss") realisiert werden kann. Zumeist kann bei Zahnbürsten dieser Art auch die Rotationsrichtung geändert werden, sodass sowohl bei der unteren als auch bei der oberen Zahnreihe diese zahnärztlich empfohlene Bewegungsrichtung eingehalten werden kann. Als Nachteil dieser Ausführungsform ist zu werten, dass das auf die Borsten aufgebrachte Zahnputzmittel schlechter über die Zahnoberfläche verteilt wird, da das Zahnputzmittel dazu neigt, aus der Mundhöhle geschleudert zu werden. Diesem Nachteil wird zumeist mit Schutzkappen abgeholfen.

Beide Ausführungsformen verfügen allerdings über den Nachteil, dass sie die beim manuellen Zähneputzen ausgeübten Bewegungen der Zahnbürste in Richtung der Längsachse der Zahnbürste nicht nachvollziehen können. Diese Bewegungen sind aber für eine umfassende Reinigung der Zähne wichtig, etwa bei der Reinigung der oberen Oberflächen der Backenzähne.

Es ist daher das Ziel der Erfindung, auch bei elektrisch angetriebenen Zahnbürsten eine definierte Bewegung in Richtung der Längsachse der Zahnbürste zu ermöglichen, ohne dies manuell tun zu müssen.

Dieses Ziele wird durch die Merkmale von Anspruch 1 erreicht. Anspruch 1 bezieht sich dabei auf eine elektrische Zahnbürste mit einem stabförmigen Drehelement, das in einem Gehäuse beweglich gelagert ist, wobei das Drehelement an seinem ersten Ende mit einem Bürstenkopf versehen ist, und mit seinem zweiten Ende mit einem elektrischen Motor zur Erzeugung einer Rotation des Bürstenkopfs verbindbar ist. Erfindungsgemäß ist eine mechanische Übersetzereinheit vorgesehen, die eine durch den Motor erzeugte Rotationsbewegung in eine Translationsbewegung des Drehelements parallel zu dessen Längsachse umsetzt, und die Rotation des Bürstenkopfs um die Längsachse des Drehelements erfolgt.

Anspruch 2 bezieht sich auf eine Ausführungsvariante, bei der die Borsten senkrecht zur Rotationsachse des Bürstenkopfes orientiert sind und sieht insbesondere vor, dass der Bürstenkopf rotationssymmetrisch um die Längsachse des Drehelements ausgeführt und mit Borsten versehen ist, die im wesentlichen senkrecht zur Längsachse des Drehelements orientiert sind, wobei die Rotation des Bürstenkopfs um die Längsachse des Drehelements erfolgt. Gemäß Anspruch 12 ist der Bürstenkopf dabei als Geoid ausgeführt.

Gemäß Anspruch 3 ist ein Kupplungsteil vorgesehen, das das zweite Ende des stabförmigen Drehelements mit dem elektrischen Motor verbindet.

Anspruch 4 bezieht sich auf eine erste Ausführungsform der mechanischen Übersetzereinheit und sieht vor, dass die mechanische Übersetzereinheit eine mit dem Drehelement fest verbundene, scheibenförmige Kulisse umfasst, die mit einer ihrer Scheibenoberflächen an einem am Gehäuse angeordneten Gegenlager anliegt und mittels eines Federelements gegen dieses Gegenlager vorgespannt ist, wobei die scheibenförmige Kulisse in ihrem mit dem Gegenlager zusammenwirkenden Umfangsbereich eine variierende Dicke aufweist. Gemäß Anspruch 5 kann die Dicke der scheibenförmigen Kulisse entlang des mit dem Gegenlager zusammenwirkenden Umfangsbereiches sinusförmig variieren. Gemäß Anspruch 6 stützt sich das Federelement am Kupplungsteil ab.

Anspruch 7 bezieht sich auf eine weitere Ausführungsform der mechanischen Übersetzereinheit und sieht vor, dass die mechanische Übersetzereinheit ein Kegelrad-Getriebe umfasst, dessen erstes Kegelrad mit dem Kupplungsteil gekoppelt ist, und dessen zweites Kegelrad über einen Kurbeltrieb mit einer Kurbelstange zusammenwirkt, die zur Übertragung der so erzeugten Translationsbewegung mit dem Drehelement verbunden ist. Gemäß Anspruch 8 kann die Kurbelstange auch fest mit dem Drehelement verbunden sein, wobei sie in diesem Fall senkrecht zur Kurbelstangenachse ausreichend elastisch ausgeführt sein muss, um durch die Kurbelbewegung vermittelte Ablenkungen senkrecht zur Kurbelstangenachse federnd aufnehmen zu können.

Anspruch 9 bezieht sich auf eine weitere Ausführungsform der mechanischen Übersetzereinheit und sieht vor, dass die mechanische Übersetzereinheit eine in axialer Richtung des Drehelements angeordnete Welle umfasst, die mit dem elektrischen Motor zur Erzeugung einer Rotation um die Längsachse der Welle gekoppelt ist und an der eine Führungsscheibe befestigt ist, wobei die Ebene der Führungsscheibe von der zur Achse der Welle senkrechten Richtung abweicht und in ihrem äußeren Umfangsbereich in einer am Gehäuse angeordneten Nut unter einer mittels eines Federelements vermittelten Vorspannung geführt ist. Dabei ist es gemäß Anspruch 10 etwa denkbar, dass das Federelement einerseits mit dem Motor verbunden ist und sich andererseits am Gehäuse abstützt.

Für alle vorgeschlagenen Ausführungsformen sind die Merkmale von Anspruch 11 vorteilhaft, dem zu Folge das Drehelement mit dem Motor über eine Steckverbindung verbindbar ist. Das erlaubt ein einfaches Austauschen des Drehelements und somit des Bürstenkopfes.

Die Erfindung wird im folgenden anhand der beiliegenden Zeichnungen häher erläutert. Es zeigen hierbei die
Fig. 1 eine Darstellung einer ersten Ausführungsform einer erfindungsgemäßen Zahnbürste, bei der die mechanische Übersetzereinheit eine mit dem Drehelement fest verbundene, scheibenförmige Kulisse umfasst, wobei das Gehäuse nur angedeutet wurde,
Fig. 2 eine weitere Ausführungsform der mechanischen Übersetzereinheit, bei der die mechanische Übersetzereinheit ein Kegelrad-Gewinde umfasst, wobei das Gehäuse weggelassen wurde, und
Fig. 3 eine weitere Ausführungsform der mechanischen Übersetzereinheit, bei der die mechanische Übersetzereinheit eine in axialer Richtung des Drehelements angeordnete Welle umfasst, wobei das Gehäuse nur angedeutet wurde.

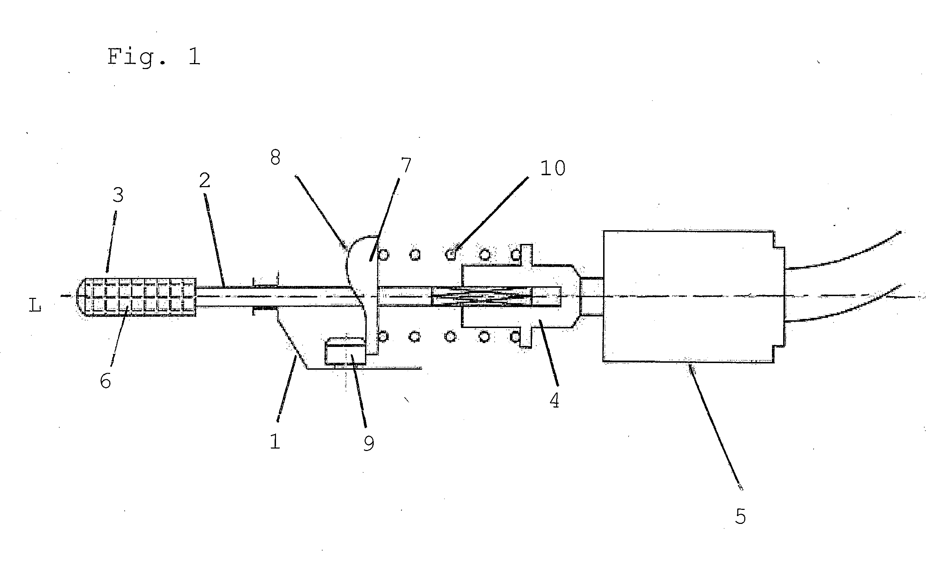

Zunächst wird mithilfe der Fig. 1 auf eine erste Ausführungsform der erfindungsgemäßen Zahnbürste eingegangen. Fig. 1 zeigt hierbei eine Zahnbürste mit einem Gehäuse 1 und einem im Gehäuse 1 beweglich gelagerten, stabförmigen Drehelement 2, das an seinem ersten Ende mit einem Bürstenkopf 3 versehen ist, und an seinem zweiten Ende mit einem Kupplungsteil 4 zur Erzeugung einer Rotation des Bürstenkopfs 3 verbindbar ist, wobei das Kupplungsteil 4 von einem elektrischen Motor 5 angetrieben wird. Der Bürstenkopf 3 ist gemäß der in der Fig. 1 gezeigten Ausführungsform rotationssymmetrisch um die Längsachse L des Drehelements 2 ausgeführt und mit Borsten 6 versehen, die im wesentlichen senkrecht zur Längsachse L des Drehelements 2 orientiert sind. Die Rotation des Bürstenkopfs 3 erfolgt in diesem Fall um die Längsachse L des Drehelements 2. Die Borsten 6 können auch spiralförmig entlang der Oberfläche des Bürstenkopfes 3 angeordnet werden, um so die Reinigungswirkung zu erhöhen.

Des weiteren ist erfindungsgemäß eine mechanische Übersetzereinheit vorgesehen, die gemäß der in der Fig. 1 gezeigten Ausführungsform eine durch das Kupplungsteil 4 erzeugte Rotationsbewegung in eine Translationsbewegung des Drehelements 2 parallel zu dessen Längsachse L umsetzt. Die mechanische Übersetzereinheit umfasst eine mit dem Drehelement 2 fest verbundene, scheibenförmige Kulisse 7, die mit einer ihrer Scheibenoberflächen 8 an einem am Gehäuse 1 angeordneten Gegenlager 9 anliegt und auf ihm abrollt. Die scheibenförmige Kulisse 7 ist des weiteren mittels eines Federelements 10 gegen dieses Gegenlager 9 vorgespannt. Das Federelement 10 stützt sich etwa am Kupplungsteil 4 ab.

Die scheibenförmige Kulisse 7 weist in ihrem mit dem Gegenlager 9 zusammenwirkenden Umfangsbereich eine variierende Dicke auf. Vorzugsweise variiert die Dicke der scheibenförmigen Kulisse 7 entlang des mit dem Gegenlager 9 zusammenwirkenden Umfangsbereiches sinusförmig. Wird nun das Kupplungsteil 4 mithilfe des elektrischen Motors 5 in Rotation versetzt, überträgt sich diese Rotation auf das Drehelement 2 und die Kulisse 7. Da die Kulisse 7 mithilfe des Federelements 10 am Gegenlager 9 anliegt, erzeugt die variierende Dicke der scheibenförmigen Kulisse 7 eine variierende Positionierung der Kulisse 7 relativ zum Gegenlager 9 und somit zum Gehäuse 1. Da die Kulisse 7 fest mit dem Drehelement 2 verbunden ist, stellt diese variierende Positionierung letztendlich die Translationsbewegung des Drehelements 2 parallel zu dessen Längsachse L dar.

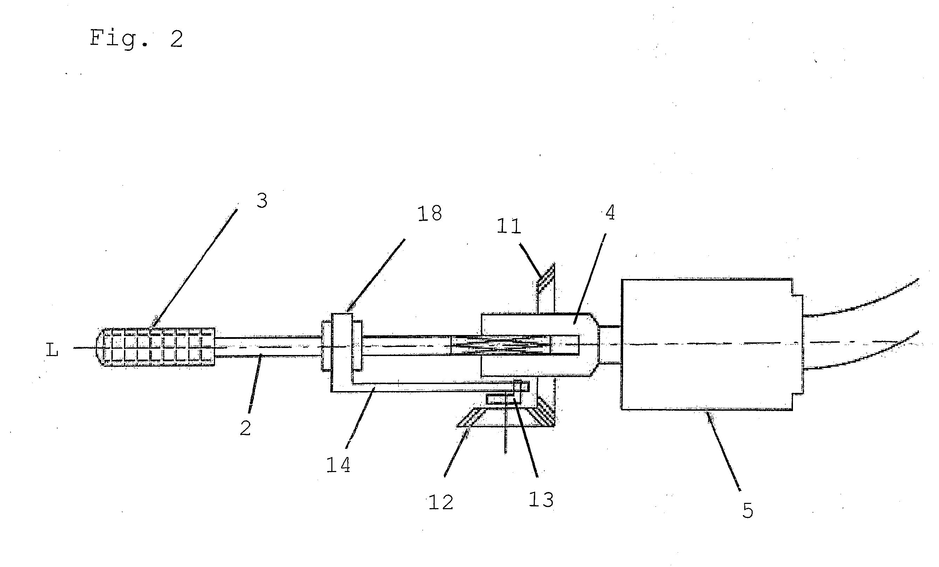

Eine weitere Ausführungsform der mechanischen Übersetzereinheit ist in der Fig. 2 dargestellt. Hierbei umfasst die mechanische Übersetzereinheit ein Kegelrad-Getriebe 11, 12 mit einem ersten Kegelrad 11 und einem zweiten Kegelrad 12. Kegelrad-Getriebe erlauben auf kleinem Raum eine rechtwinkelige Anordnung von Antriebs- und Abtriebswelle, deren Rotationsachsen 90° zueinander geneigt sind. Gemäß der Ausführungsform von Fig. 2 ist dabei das erste Kegelrad 11 mit dem Kupplungsteil 4 gekoppelt, das wiederum von einem elektrischen Motor 5 angetrieben wird. Das zweite Kegelrad 12 wirkt über einen Kurbeltrieb 13 mit einer Kurbelstange 14 zusammen, die zur Übertragung der so erzeugten Translationsbewegung mit dem Drehelement 2 verbunden ist. Die Kurbelstange 14 kann auch fest mit dem Drehelement 2 verbunden sein, wobei sie in diesem Fall senkrecht zur Kurbelstangenachse ausreichend elastisch ausgeführt sein muss, um durch die Kurbelbewegung vermittelte Ablenkungen senkrecht zur Kurbelstangenachse federnd aufnehmen zu können. Wird nun das Kupplungsteil 4 in Rotation versetzt, überträgt sich die Rotation auf das erste Kegelrad 11, das wiederum das zweite Kegelrad 12 in Rotation versetzt. Die Abtriebswelle des zweiten Kegelrads 12 ist aber relativ zur Antriebswelle des ersten Kegelrads 11 um 90° geneigt. Die Abtriebswelle des zweiten Kegelrads 12 versetzt in weiterer Folge den Kurbeltrieb 13 in Rotation, der die Kurbelstange 14 bewegt. Bei diesem kinematischen Übergang wird die Rotationsbewegung in eine Translationsbewegung mit einer Bewegungskomponente parallel zur Längsachse L umgesetzt. Die Bewegungskomponente parallel zur Längsachse L wird aufgrund der festen Verbindung zwischen der Kurbelstange 14 und dem Drehelement 2, die mithilfe einer Halteöse 18 hergestellt wird, auf das Drehelement 2 übertragen. Gemäß der Ausführungsform von Fig. 2 wird die Bewegungskomponente senkrecht zur Längsachse L durch die Elastizität der Kurbelstange 14 abgefedert.

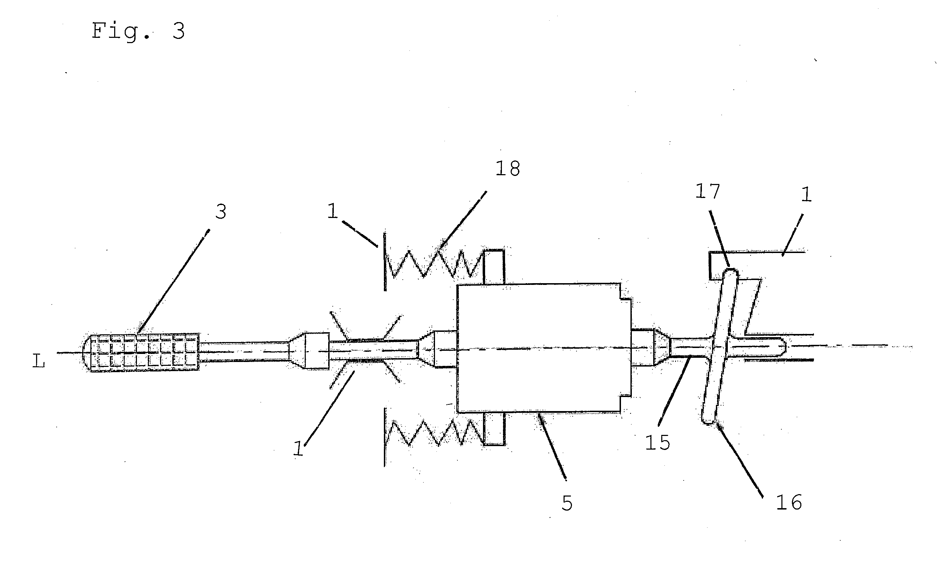

Die Fig. 3 stellt eine weitere Ausführungsform der mechanischen Übersetzereinheit dar, bei der die mechanische Übersetzereinheit eine in axialer Richtung des Drehelements 2 angeordnete Welle 15 umfasst, die mit dem Kupplungsteil 4 zur Erzeugung einer Rotation um die Längsachse der Welle 15 gekoppelt ist. Gemäß Fig. 3 kann das Kupplungsteil 4 aber auch fehlen, falls das Drehelement 2 und die Welle 15 direkt mit dem Rotor des elektrischen Motors 5 verbunden werden. An der Welle 15 ist eine Führungsscheibe 16 befestigt, wobei die Ebene der Führungsscheibe 16 von der zur Längsachse der Welle 15 senkrechten Richtung abweicht und in ihrem äußeren Umfangsbereich in einer am Gehäuse 1 angeordneten Nut 17 unter einer mittels eines Federelements 18 vermittelten Vorspannung geführt ist. Das Federelement 19 ist einerseits mit dem Motor 5 verbunden und stützt sich andererseits am Gehäuse 1 ab. Das Gehäuse 1 wurde in der Fig. 3 nur teilweise angedeutet. Wird das Kupplungsteil 4 in Rotation versetzt, so überträgt sich die Rotation auf die Welle 15 und die Führungsscheibe 16. Da die Führungsscheibe 16 einerseits in ihrem äußeren Umfangsbereich in einer am Gehäuse 1 angeordneten Nut 17 geführt ist, und andererseits die Ebene der Führungsscheibe 16 von der zur Längsachse der Welle 15 senkrechten Richtung abweicht, vollzieht die Welle 15 eine Bewegung in Richtung der Längsachse L der Welle 15. Ist das Drehelement 2 parallel zur Welle 15 angeordnet und mit ihr über das Kupplungsteil 4 oder direkt mit ihr verbunden, überträgt sich diese Bewegung auch auf das Drehelement 2. Wiederum wird die durch den Motor 5 bereitgestellte Rotationsbewegung in eine Translationsbewegung des Drehelements 2 parallel zu dessen Längsachse L umgesetzt.

Für alle vorgeschlagenen Ausführungsformen ist es dabei vorteilhaft, wenn das Drehelement 2 mit dem Kupplungsteil 4 über eine Steckverbindung verbindbar ist. Das erlaubt ein einfaches Austauschen des Drehelements 2 und somit des Bürstenkopfes 3.

Die erfindungsgemäße Zahnbürste ermöglicht somit auf einfache Art und Weise auch bei elektrisch angetriebenen Zahnbürsten eine definierte Bewegung in Richtung der Längsachse der Zahnbürste, ohne dies manuell tun zu müssen. Dadurch wird die Vielfalt der ausführbaren Bewegungen erhöht und die Putzwirkung verbessert.

## Patentansprüche

1. Elektrische Zahnbürste mit einem stabförmigen Drehelement (2), das in einem Gehäuse (1) beweglich gelagert ist, wobei das Drehelement (2) an seinem ersten Ende mit einem Bürstenkopf (3) versehen ist, und mit seinem zweiten Ende mit einem elektrischen Motor (5) zur Erzeugung einer Rotation des Bürstenkopfs (3) verbindbar ist, **dadurch gekennzeichnet, dass** eine mechanische Übersetzereinheit vorgesehen ist, die eine durch den Motor (5) erzeugte Rotationsbewegung in eine Translationsbewegung des Drehelements (2) parallel zu dessen Längsachse (L) umsetzt, und die Rotation des Bürstenkopfs (3) um die Längsachse (L) des Drehelements (2) erfolgt.

2. Elektrische Zahnbürste nach Anspruch 1, **dadurch gekennzeichnet, dass** der Bürstenkopf (3) rotationssymmetrisch um die Längsachse (L) des Drehelements (2) ausgeführt und mit Borsten (6) versehen ist, die im wesentlichen senkrecht zur Längsachse (L) des Drehelements (2) orientiert sind.

3. Elektrische Zahnbürste nach Anspruch 1 oder 2, **dadurch gekennzeichnet, dass** ein Kupplungsteil (4) vorgesehen ist, das das zweite Ende des stabförmigen Drehelements (2) mit dem elektrischen Motor (5) verbindet.

4. Elektrische Zahnbürste nach einem der Ansprüche 1 bis 3,
**dadurch gekennzeichnet, dass** die mechanische Übersetzereinheit eine mit dem Drehelement (2) fest verbundene, scheibenförmige Kulisse (7) umfasst, die mit einer ihrer Scheibenoberflächen (8) an einem am Gehäuse
(1) angeordneten Gegenlager (9) anliegt und mittels eines Federelements (10) gegen dieses Gegenlager (9) vorgespannt ist, wobei die scheibenförmige Kulisse (7) in ihrem mit dem Gegenlager (9) zusammenwirkenden Umfangsbereich eine variierende Dicke aufweist.

5. Elektrische Zahnbürste nach Anspruch 4, **dadurch gekennzeichnet, dass** die Dicke der scheibenförmigen Kulisse (7) entlang des mit dem Gegenlager (9) zusammenwirkenden Umfangsbereiches sinusförmig variiert.

6. Elektrische Zahnbürste nach Anspruch 4 oder 5, **dadurch gekennzeichnet, dass** sich das Federelement (10) am Kupplungsteil (4) abstützt.

7. Elektrische Zahnbürste nach einem der Ansprüche 1 bis 3,
**dadurch gekennzeichnet, dass** die mechanische Übersetzereinheit ein Kegelrad-Getriebe (11, 12) umfasst, dessen erstes Kegelrad (11) mit dem Kupplungsteil (4) gekoppelt ist, und dessen zweites Kegelrad (12) über einen Kurbeltrieb (13) mit einer Kurbelstange (14) zusammenwirkt, die zur Übertragung der so erzeugten Translationsbewegung mit dem Drehelement (2) verbunden ist.

8. Elektrische Zahnbürste nach Anspruch 7, **dadurch gekennzeichnet, dass** die Kurbelstange (14) fest mit dem Drehelement (2) verbunden ist und senkrecht zur Achse der Kurbelstange (14) ausreichend elastisch ausgeführt ist, um durch die Kurbelbewegung vermittelte Ablenkungen senkrecht zur Kurbelstangenachse federnd aufzunehmen.

9. Elektrische Zahnbürste nach einem der Ansprüche 1 bis 3,
**dadurch gekennzeichnet, dass** die mechanische Übersetzereinheit eine in axialer Richtung des Drehelements (2) angeordnete Welle (15) umfasst, die mit dem elektrischen Motor (5) zur Erzeugung einer Rotation um die Längsachse der Welle (15) gekoppelt ist und an der eine Führungsscheibe (16) befestigt ist, wobei die Ebene der Führungsscheibe (16) von der zur Achse der Welle (15) senkrechten Richtung abweicht und in ihrem äußeren Umfangsbereich in einer am Gehäuse (1) angeordneten Nut (17) unter einer mittels eines Federelements (18) vermittelten Vorspannung geführt ist.

10. Elektrische Zahnbürste nach Anspruch 9, **dadurch gekennzeichnet, dass** das Federelement (18) einerseits mit dem Motor (5) verbunden ist und sich andererseits am Gehäuse (1) abstützt.

11. Elektrische Zahnbürste nach einem der Ansprüche 1 bis 10,
**dadurch gekennzeichnet, dass** das Drehelement (2) mit dem Motor (5) über eine Steckverbindung verbindbar ist.

12. Elektrische Zahnbürste nach einem der Ansprüche 1 bis 11,
**dadurch gekennzeichnet, dass** der Bürstenkopf (3) als Geoid ausgeführt ist.
